(19) **Europäisches Patentamt**
**European Patent Office**
**Office européen des brevets**

(11) **EP 2 056 118 A1**

(12) # EUROPÄISCHE PATENTANMELDUNG

(43) Veröffentlichungstag:
**06.05.2009 Patentblatt 2009/19**

(51) Int Cl.:
***G01S 1/00*** *(2006.01)*

(21) Anmeldenummer: **08018111.8**

(22) Anmeldetag: **16.10.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **22.10.2007 DE 102007050716**

(71) Anmelder: **Astrium GmbH**
**81663 München (DE)**

(72) Erfinder: **Trautenberg, Hans L., Dr.**
**85521 Ottobrunn (DE)**

(74) Vertreter: **Hummel, Adam**
**EADS Deutschland GmbH**
**Patentabteilung**
**81663 München (DE)**

(54) **Verfahren und Vorrichtung zur Verbesserung der Integritätskommunikation in einem Satellitensystem**

(57) Die Erfindung betrifft ein Verfahren zur Verbesserung der Integritätskommunikation in einem Satellitennavigationssystem (10), das ein Raumsegment (12) mit mehreren Satelliten (14), die Navigationssignale (16) zum Empfangen und Auswerten durch Nutzungssysteme (18) für die Positionsbestimmung aussenden, und ein Bodensegment (20) mit mehreren Beobachtungsstationen (22), welche die Satelliten (14) überwachen, umfasst, wobei das Verfahren Folgendes umfasst:
- Übertragen eines Fehlerbudgets für unterschiedliche Beobachtungsstationen oder Gruppen von Beobachtungsstationen mit einem Navigationssignal eines Satelliten (S10), und
- Empfangen des Navigationssignals und Auswerten des darin enthaltenden Fehlerbudgets, indem aus dem Fehlerbudget ein skalarer Wert berechnet wird, der die Genauigkeit der Fehlerabschätzung der Erzeugung des Navigationssignals angibt (S12).

Fig. 1

**Beschreibung**

Die Erfindung betrifft ein Verfahren zur Verbesserung der Integritätskommunikation in einem Satellitennavigationssystem gemäß Anspruch 1 und eine Vorrichtung zur Verbesserung der Integritätskommunikation in einem Satellitennavigationssystem gemäß Anspruch 13.

Satellitensysteme zur weltweiten Navigation (GNSS; GNSS = Global Navigation Satellite System, kurz Satellitennavigationssystem) werden zur Positionsbestimmung und Navigation auf der Erde, auf dem Wasser und in der Luft eingesetzt. GNSS Systeme, wie beispielsweise das im Aufbau befindliche europäische Satellitennavigationssystem (im Folgenden auch als Galileo-System oder kurz Galileo bezeichnet) weisen ein, eine Mehrzahl von Satelliten umfassendes Satelliten-System (Raumsegment), ein mit einer zentralen Berechnungsstation verbundenes erdfestes Empfangseinrichtungs-System (Bodensegment), das mehrere Bodenstationen sowie Galileo-Sensorstationen umfasst, sowie Nutzungssysteme auf, welche die von den Satelliten per Funk übermittelten Satellitensignale insbesondere zur Navigation auswerten und nutzen. Die Vorrichtung und Methode kann auch für regionale Satellitennavigationsergänzungssysteme oder regionale Satellitennavigationssysteme wie auch für regionale Navigationssysteme eingesetzt werden.

In einem GNSS erfordert eine genaue Detektion der Position eines Nutzers sowohl lokale als auch globale Integrität. Integrität bedeutet insbesondere, dass einerseits das GNSS imstande ist, einen Nutzer innerhalb einer bestimmten Zeitspanne zu warnen, wenn Teile des GNSS nicht für die Navigation benutzt werden sollen, beispielsweise bei Ausfall von Systemkomponenten, und dass andererseits der Nutzer den Navigationsdaten, die er über Satellitennavigationssignale von den Satelliten des GNSS erhält, vertrauen kann, insbesondere sich auf die Genauigkeit der empfangenen Navigationsdaten verlassen kann.

Beim Integritätskonzept von Galileo ist geplant, jeden Satellit vom erdfesten Empfangseinrichtungs-System zu überwachen und entsprechende Nachrichten-Signale bezüglich des Verhaltens jedes Satelliten an Nutzungssysteme zu übertragen, beispielsweise eine geschätzte Signal-In-Space-Accuracy (SISA) eines Satelliten oder eine einfache Fehleranzeige "Not OK" bei einem fehlerhaften Satelliten oder die Genauigkeit mit der Fehler auf den Navigationssignalen durch das Beobachtungssystem festgestellt werden können.

Galileo soll auch fähig sein, das Signal-In-Space (SIS) innerhalb des Bodensegments durch Benutzung der Messungen von den einzelnen Galileo-Sensorstationen zu überwachen. Mithilfe der bekannten Positionen der Galileo-Sensorstationen kann dann die aktuelle Position eines Satelliten und damit der maximale Fehler des Satelliten bzw. des von ihm ausgesandten Signals im Raum, der sogenannte Signal-In-Space-Error (SISE) geschätzt werden.

Eine Voraussage der Verteilung des SISE kann durch eine Gaussverteilung mit der kleinsten Standardabweichung dargestellt werden. Diese Voraussage wird als Signal-In-Space-Accuracy (SISA) bezeichnet. Mit der SISA kann die Differenz zwischen der aktuellen 4-dimensionalen Position (Orbit und Uhrzeit) eines Satelliten und der vorausgesagten 4-dimensionalen Position, die in einer Navigationsnachricht enthalten ist, beschrieben werden.

Die Schätzung des SISE ist allerdings ein fehlerträchtiger Prozess. Daher wird in der Regel angenommen, dass die Verteilung des aktuellen SISE um den Wert des geschätzten SISE mit einer Gaussverteilung mit der Standardabweichung beschrieben werden kann, die als Signal-In-Space-Monitoring-Accuracy (SISMA) bezeichnet wird. SISMA ist also die Genauigkeit der Schätzung des SISE für einen Satelliten.

Beim bisherigen Konzept von Galileo für die Übertragung von SISMA wird für jeden Satelliten ein skalarer Wert übertragen, der für jede mögliche Position eines Nutzungssystems (Benutzerposition) konservativ ist. Dadurch wird jedoch viel von der Leistungsfähigkeit des GNSS verschenkt, da ein an vielen Positionen deutlich zu großer Wert übertragen wird, was zu einer aufwendigen Integritätskommunikation im GNSS führt, und viel von der Leistungsfähigkeit des Bobachtungssystems dem Benutzer nicht zugänglich gemacht wird.

Da die einzelnen Beobachtungsstationen eine relativ hohe Ausfallwahrscheinlichkeit aufweisen, ist es zudem nochmals notwendig, mögliche Ausfälle von Bodenstationen schon im Voraus bei der Berechnung des skalaren Werts zu berücksichtigen, wobei so viele Ausfälle berücksichtigt werden müssen, dass auch die strengsten Kontinuitätsanforderungen erfüllt werden können. Diese Berücksichtigung führt jedoch wieder zu einem deutlich zu großen skalaren Wert, insbesondere für Nutzungssysteme, die keine so hohen Anforderungen an die Kontinuität haben. Zudem wird zur Berechnung des skalaren Werts für jeden Satelliten die schlechteste Beobachtungsstation ausfallen gelassen, was deutlich konservativer ist als häufig erforderlich.

Aufgabe der vorliegenden Erfindung ist es daher, ein Verfahren und eine Vorrichtung zur Verbesserung der Integritätskommunikation in einem Satellitennavigationssystem zu schaffen.

Diese Aufgabe wird durch ein Verfahren zur Verbesserung der Integritätskommunikation in einem Satellitennavigationssystem mit den Merkmalen von Anspruch 1 und eine Vorrichtung zur Verbesserung der Integritätskommunikation in einem Satellitennavigationssystem mit den Merkmalen von Anspruch 13 gelöst. Weitere Ausgestaltungen der Erfindung sind Gegenstand der abhängigen Ansprüche.

Ein wesentlicher Gedanke der Erfindung besteht darin, für die unterschiedlichen Beobachtungsstationen eines Satellitennavigationssystems oder für Gruppen von Beobachtungsstationen eines Satellitennavigationssystems Fehlerbudgets an Nutzungssysteme zu übertragen, aus denen dann mithilfe der auch an die Nutzungssysteme übertragene Positionen der Beobachtungsstationen und der auch an die Nutzungssysteme übertragene Information über die augenblicklich verwendeten Beobachtungsstationen insbesondere von einzelnen Nutzungssystemen eine Abschätzung für die Verteilung berechnet werden kann, die die Genauigkeit der Fehlerabschätzung der Erzeugung des Navigationssignals angibt. Dadurch können die Abschätzung für die Verteilung der Genauigkeit der Fehlerabschätzung der Erzeugung des Navigationssignals, welche einzelne Nutzungssysteme verwenden, deutlich genauer (enger, kleiner) ausfallen, da die Abschätzung für die Verteilung der Genauigkeit der Fehlerabschätzung der Erzeugung des Navigationssignals ortsabhängig von einem Nutzungssystem berechnet werden kann und nicht mehr eine Abschätzung für die Verteilung der Genauigkeit der Fehlerabschätzung der Erzeugung des Navigationssignals für alle Nutzungssysteme in einer Zentrale des Satellitennavigationssystems ausgerechnet und an die Nutzungssysteme übertragen werden muss. Zudem können durch die Berechnung in einem Nutzungssystem auch Kontinuitätsanforderungen einzelner Nutzungssysteme berücksichtigt werden, wodurch nicht mehr die höchsten Anforderungen an Kontinuität bei jedem Nutzungssystem erfüllt werden müssen. Insgesamt kann durch die Erfindung die Integritätskommunikation in einem Satellitennavigationssystem deutlich verbessert werden, da deutlich genauere Abschätzungen für die Verteilung der Genauigkeit der Fehlerabschätzung der Erzeugung des Navigationssignals im Nutzungssystem verwendet werden können.

Die Abschätzung für die Verteilung der Genauigkeit der Fehlerabschätzung der Erzeugung des Navigationssignals kann auch ein skalarer Wert sein.

Die Erfindung betrifft nun gemäß einer Ausführungsform ein Verfahren zur Verbesserung der Integritätskommunikation in einem Satellitennavigationssystem, das ein Raumsegment mit mehreren Satelliten, die Navigationssignale zum Empfangen und Auswerten durch Nutzungssysteme für die Positionsbestimmung aussenden, und ein Bodensegment mit mehreren Beobachtungsstationen, welche die Satelliten überwachen, umfasst, wobei das Verfahren Folgendes umfasst:

- Übertragen eines Fehlerbudgets für unterschiedliche Beobachtungsstationen oder Gruppen von Beobachtungsstationen mit einem Navigationssignal eines Satelliten,
- Übertragen der Positionen der Beobachtungsstationen,
- Übertragung welche Beobachtungsstationen Beobachtungen liefern,
- Übertragung ab welchem Elevationswinkel Beobachtungsstationen Beobachtungen liefern,
- Übertragung welche Bodenstationen keine Beobachtungen liefern,
- Übertragung welche Beobachtungen von bestimmten Bodenstation zu bestimmten Satelliten nicht verfügbar sind, obwohl sie nach vorstehenden Regeln verfügbar sein sollten
  und
- Empfangen des Navigationssignals und Auswerten des darin enthaltenden Fehlerbudgets, indem aus dem Fehlerbudget, den Koordinaten der verwendeten Beobachtungsstationen eine signalspezifische, nutzersystemabhängige und nutzersystempositionsabhängige Abschätzung für die Verteilung der Genauigkeit der Fehlerabschätzung der Erzeugung des Navigationssignals durch das Beobachtungssystem berechnet wird, der die Genauigkeit der Fehlerabschätzung der Erzeugung des Navigationssignals durch das Beobachtungssystem angibt.

Die Erzeugung des Navigationssignals bezieht sich hierbei insbesondere auf den Orbit des das Signal aussendenden Satelliten, die Sendezeit des Signals und die Signalstruktur. Durch dieses Verfahren kann ein Nutzungssystem deutlich kleinere Werte als die eingangs erläuterten konservativen und daher relativ großen Werte erhalten. Insgesamt lässt sich daher die Integritätskommunikation im Satellitennavigationssystem zu einzelnen Nutzungssystemen verbessern. Die Übertragung kann generell mit einer relativ geringen Wiederholrate erfolgen, um den durch die Integritätskommunikation verursachten Datenverkehr im Satellitennavigationssystem möglichst gering zu halten.

Gemäß einer Ausführungsform der Erfindung kann das Fehlerbudget als ein statistischer Betrag übertragen werden.

Ferner kann gemäß einer Ausführungsform der Erfindung das Fehlerbudget zusätzlich als Intervalle für die Mittelwerte mehrerer Fehlerbudgets übertragen werden.

Das Fehlerbudget kann ferner gemäß einer Ausführungsform der Erfindung elevationsabhängig sein. Das ermöglicht eine noch genauere Berechnung eines skalaren Wertes und damit der Genauigkeit der Fehlerschätzung.

Zudem können gemäß einer Ausführungsform der Erfindung Koordinaten der für die Bestimmung des Fehlerbudgets verwendeten Beobachtungsstationen und die damit verbundenen Abschattungswinkel übertragen und für die Berechnung der Verteilung der Genauigkeit der Fehlerabschätzung der Erzeugung des Navigationssignals verwendet werden. Auch hier kann die Übertragung mit einer relativ geringen Wiederholrate erfolgen.

Weiterhin kann gemäß einer Ausführungsform der Erfindung die erwartete Kontinuität der Verfügbarkeit von Messungen einer jeden für die Bestimmung des Fehlerbudgets verwendeten Beobachtungsstation oder jeder Gruppe von Beobachtungsstationen übertragen und für die Berechnung des skalaren Werts verwendet werden, was vor allem bei Berechnung der Verteilung der Genauigkeit der Fehlerabschätzung der Erzeugung des Navigationssignals und deren Zuverlässigkeit vorteilhaft ist.

In einer weiteren Ausführungsform der Erfindung kann ferner eine erste Alarmnachricht mit dem Navigationssignal übertragen werden, wenn eine Beobachtungsstation ausgefallen ist. Damit kann ein Nutzungssystem gewarnt werden, was bei der Berechnung der Verteilung der Genauigkeit der Fehlerabschätzung der Erzeugung des Navigationssignals auf Basis des empfangenen Fehlerbudgets berücksichtigt werden kann.

Ferner kann gemäß einer Ausführungsform der Erfindung bei Verlust von einer Messung eines Satellitensignals durch eine Beobachtungsstation die Nummer der Beobachtungsstation und des betroffenen Satelliten mit dem Satellitennavigationssignal übertragen werden, sodass ein Nutzungssystem erkennen kann, welche Beobachtungsstationen für eine Berechnung der Verteilung der Genauigkeit der Fehlerabschätzung der Erzeugung des Navigationssignals eines bestimmten Signals (Satelliten) nicht verwendet werden darf.

Außerdem kann gemäß einer Ausführungsform der Erfindung ferner eine zweite Alarmnachricht mit dem Navigationssignal übertragen werden, wenn das Fehlerbudget verändert werden soll. Hierdurch können die Nutzungssysteme sofort darüber informiert werden, dass eine Neuberechnung des Verteilung der Genauigkeit der Fehlerabschätzung der Erzeugung des Navigationssignals auf Basis des geänderten Fehlerbudgets erforderlich sein kann.

Die Erfindung sieht in einer weiteren Ausführungsform ein Nutzungssystem für ein Satellitennavigationssystem vor, insbesondere ein mobiles Navigationsgerät, das zur Benutzung mit einem Verfahren nach der Erfindung und wie vorstehend beschrieben ausgebildet ist.

Insbesondere kann gemäß einer Ausführungsform der Erfindung das Nutzungssystem ferner ausgebildet sein, aus einem empfangenen Fehlerbudget die Verteilungen der Genauigkeit der Fehlerabschätzung der Erzeugung des Navigationssignals zu berechnen und daraus ein Integritätsrisiko zu ermitteln.

Weiterhin kann gemäß einer Ausführungsform der Erfindung das Nutzungssystem ferner ausgebildet sein, die Verteilung der Genauigkeit der Fehlerabschätzung der Erzeugung des Navigationssignals derart zu berechnen, dass eine vorbestimmte Kontinuität erreicht werden kann. Hierdurch kann ein Nutzungssystem entsprechend seinen Kontinuitätsanforderungen eine entsprechend optimierte Verteilung der Genauigkeit der Fehlerabschätzung der Erzeugung des Navigationssignals berechnen. Die Optimierung erfolgt dadurch, dass in geeigneter Weise Beobachtungsstationen schon im voraus als potentiell nicht verfügbar berücksichtig werden. Diese Optimierung kann im Benutzersystem, an die individuellen Nutzeranforderungen angepasst, durchgeführt werden.

Schließlich ist gemäß einer Ausführungsform der Erfindung eine Vorrichtung zur Verbesserung der Integritätskommunikation in einem Satellitennavigationssystem vorgesehen, wobei das Satellitennavigationssystem ein Raumsegment mit mehreren Satelliten, die Navigationssignale zum Empfangen und Auswerten durch Nutzungssysteme für die Positionsbestimmung aussenden, und ein Bodensegment mit mehrere Beobachtungsstationen, welche die Satelliten überwachen, umfasst, und wobei die Vorrichtung Folgendes umfasst:

- Fehlerbudgetbestimmungsmittel zum Bestimmen eines Fehlerbudgets für unterschiedliche Beobachtungsstationen oder Gruppen von Beobachtungsstationen, und
- Übertragungsmittel zum Übertragen des Fehlerbudgets an mindestens einen Satelliten zum Aussenden mit einem Navigationssignal eines Satelliten.

Eine derartige Vorrichtung kann beispielsweise im Bodensegment angeordnet sein und mittels des oder der Fehlerbudgets die Integritätskommunikation im Satellitennavigationssystem beeinflussen.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:

Fig. 1    ein Satellitennavigationssystem mit einem Ausführungsbeispiel einer Vorrichtung zur Verbesserung der Integritätskommunikation in einem Satellitennavigationssystem gemäß der Erfindung; und

Fig. 2    ein Flussdiagramm eines Ausführungsbeispiels eines Verfahrens zur Verbesserung der Integritätskommunikation in einem Satellitennavigationssystem gemäß der Erfindung.

Im Folgenden können gleiche und/oder funktional gleiche Elemente mit den gleichen Bezugszeichen versehen sein.

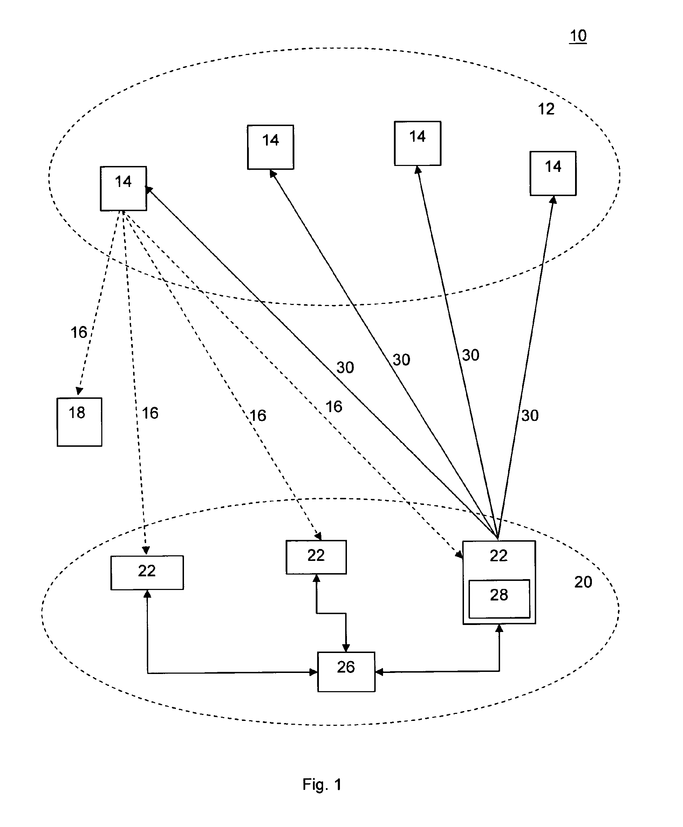

In Fig. 1 ist ein Satellitennavigationssystem 10 mit einem Raumsegment 12 und einem Bodensegment 20 dargestellt. Das Raumsegment 12 umfasst mehrere Satelliten 14, die auf ihrem jeweiligen Orbit um das Bodensegment 20 kreisen. Jeder Satellit sendet Navigationssignale 16 aus, die von Nutzungssystemen 18 wie beispielsweise mobilen Navigationsgeräten sowie von Beobachtungsstationen 22 des Bodensegments 20 empfangen werden können. Die Beobachtungsstationen 22 sind insbesondere zur Überwachung der Satelliten 14 und Koordination von beispielsweise der Integritätskommunikation im Satellitennavigationssystem 10 vorgesehen. Hierzu werten Sie die empfangenen Navigationssignale 16 aus, indem sie die mit jedem Navigationssignal 16 übertragenen Daten eines Satelliten 14, insbesondere Orbit und Zeitpunkt der Signalerzeugung sowie Signalstruktur überprüfen. Eine Beobachtungsstation 22 kann auch Steuernachrichten 30 an Satelliten senden, beispielsweise um eine Korrektur von Satellitendaten zu bewirken oder um die Integritätskommunikation im Satellitennavigationssystem 10 zu beeinflussen, wie im Folgenden noch genauer beschrieben wird.

Um die Integritätskommunikation im Satellitennavigationssystem 10 zu verbessern, wird nach der Erfindung ein Fehlerbudget für unterschiedliche Beobachtungsstationen oder Gruppen von Beobachtungsstationen mit den Navigationssignalen 16 der Satelliten 14 an Nutzungssysteme 18 übertragen. Jedes Nutzungssystem 18, das ein Satellitennavigationssignal 16 mit dem Fehlerbudget empfängt, kann das Fehlerbudget derart auswerten, dass es daraus einen skalaren Wert berechnet, der die Genauigkeit der Fehlerabschätzung der Erzeugung des Satellitennavigationssignals, mit dem das Fehlerbudget übertragen wurde, also den SISMA angibt. Anstelle einer direkten Übertragung eines skalaren Werts, der mit dem Navigationssignal 16 von einem Satelliten 14 übertragen wird und wie eingangs erläutert relativ starr und daher sehr konservativ ist, da alle möglichen Satellitenfehler im System berücksichtigt werden müssen und keine individuelle Anpassung an beispielsweise die Position und Anforderung eines Nutzungssystems möglich ist, wird nun erfindungsgemäß ein oder mehrere Fehlerbudgets für unterschiedliche Beobachtungsstationen oder Gruppen von Beobachtungsstationen übertragen, aus dem sich jedes Nutzungssystem 18 entsprechend seinen Anforderungen einen individuellen skalaren Wert berechnen kann, der für die Einstufung des Integritätsrisikos von Satellitennavigationssignalen dient. Damit wird die Integritätskommunikation wesentlich verbessert, da sie individueller auf einzelne Nutzungssysteme und deren Anforderungen zugeschnitten werden kann.

Das Fehlerbudget für unterschiedliche Beobachtungsstationen oder Gruppen von Beobachtungsstationen kann durch Fehlerbudgetbestimmungsmittel 26 im Bodensegment 20 ermittelt werden. Hierzu können Daten von den einzelnen Beobachtungsstationen 22 an die Fehlerbudgetbestimmungsmittel 26 zur Auswertung von Fehlerbudgets übertragen werden. Ein von den Fehlerbudgetbestimmungsmitteln 26 ermitteltes Fehlerbudget kann dann in die Integritätskommunikation im Satellitennavigationssystem 10 dadurch eingeführt werden, dass das ermittelte Fehlerbudget an Übertragungsmittel 28 von den Fehlerbudgetbestimmungsmitteln 26 zum Aussenden an Satelliten 14 übermittelt wird. Die Übertragungsmittel 28 können in einer Beobachtungsstationen 22 angeordnet sein und dazu dienen, dass das von den Fehlerbudgetbestimmungsmitteln 26 empfangene Fehlerbudget beispielsweise mittels Steuernachrichten 30 an die einzelnen Satelliten 14 zu übertragen wird, die dann wiederum das empfangene Fehlerbudget mit ihren Satellitennavigationssignalen 16 an Nutzungssysteme 18 übertragen können.

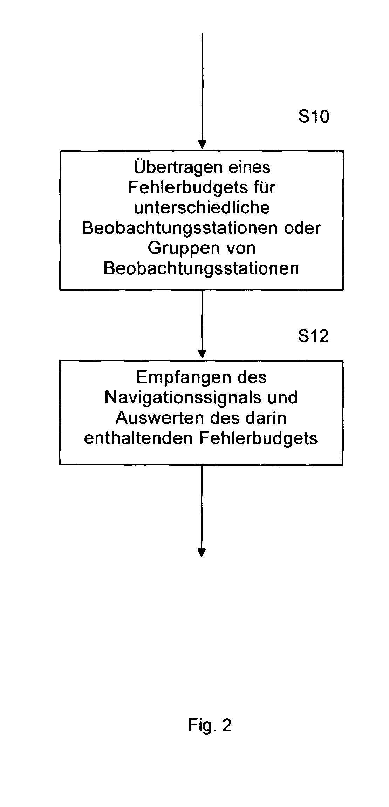

In Figur 2 ist kurz der Ablauf eines Verfahrens zur Verbesserung der Integritätskommunikationen im Satellitennavigationssystem 10 gemäß der Erfindung skizziert. In einem ersten Schritt S10 wird ein Fehlerbudget für unterschiedliche Beobachtungsstationen oder Gruppen von Beobachtungsstationen übertragen, das heißt insbesondere mit einem Satellitennavigationssignal ausgesandt. In einem zweiten Schritt S12 wird dann das Navigationssignal des Satelliten empfangen und das darin enthaltene Fehlerbudget ausgewertet, indem ein skalarer Wert aus dem Fehlerbudget unter Heranziehung individueller Anforderungen in einem Nutzungssystem berechnet wird. Somit kann ein Nutzungssystem einen individuell berechneten skalaren Wert erhalten, der das Integritätsrisiko optimiert für dieses Nutzungssystem angibt. Insgesamt wird dadurch eine verbesserte Integritätskommunikation im Satelliten Navigationssystem erreicht.

**Bezugszeichen**

10  Satellitennavigationssystem
12  Raumsegment
14  Satelliten
16  Navigationssignale
18  Nutzungssysteme
20  Bodensegment
22  Beobachtungsstationen
24  Vorrichtung zur Verbesserung der Integritätskommunikation in einem Satellitennavigationssystem
26  Fehlerbudgetbestimmungsmittel
28  Übertragungsmittel
30  Steuernachricht einer Beobachtungsstation 22

**Patentansprüche**

1. Verfahren zur Verbesserung der Integritätskommunikation in einem Satellitennavigationssystem (10), das ein Raumsegment (12) mit mehreren Satelliten (14), die Navigationssignale (16) zum Empfangen und Auswerten durch Nutzungssysteme (18) für die Positionsbestimmung aussenden, und ein Bodensegment (20) mit mehreren Beobachtungsstationen (22), welche die Signale (16) der Satelliten (14) überwachen, umfasst, wobei das Verfahren Folgendes umfasst:

   - Übertragen einer Charakterisierung eines Fehlerbudgets für unterschiedliche Beobachtungsstationen oder Gruppen von Beobachtungsstationen mit einem Navigationssignal eines Satelliten (S10), und
   - Empfangen des Navigationssignals und Auswerten der darin enthaltenen Charakterisierung des Fehlerbud-gets, indem aus der Charakterisierung des Fehlerbudget eine Verteilung der Genauigkeit der Fehlerabschätzung der Erzeugung des Navigationssignals berechnet wird (S12).

2. Verfahren nach Anspruch 1,
   **dadurch gekennzeichnet, dass**
   das Fehlerbudget als ein statistischer Betrag übertragen wird.

3. Verfahren nach Anspruch 2,
   **dadurch gekennzeichnet, dass**
   das Fehlerbudget zusätzlich als Intervalle für die Mittelwerte mehrerer Fehlerbudgets übertragen wird.

4. Verfahren nach Anspruch 1, 2 oder 3, **dadurch gekennzeichnet, dass** das Fehlerbudget p(x) **dadurch** beschrieben wird, dass zwei Funktionen qr(x) und ql(x) definiert werden, für die gilt,

$$\int_{-\infty}^{L} p(x)dx \le \int_{-\infty}^{L} ql(x)dx \text{ für alle L, } 1 - \int_{L}^{\infty} p(x)dx \ge 1 - \int_{L}^{\infty} qr(x)dx$$

für alle L, und eine Beschreibung der Funktionen ql und qr übertragen wird.

5. Verfahren nach Anspruch 5, **dadurch gekennzeichnet, dass** die Funktionen ql und qr Vielfache von Gausverteilungen sind, wobei die Gausverteilungen unterschiedliche Standardabweichungen und Mittelwerte haben können.

6. Verfahren nach einem der vorhergehenden Ansprüche,
   **dadurch gekennzeichnet, dass**
   das Fehlerbudget ferner elevationsabhängig ist.

7. Verfahren nach einem der vorhergehenden Ansprüche,
   **dadurch gekennzeichnet, dass**
   zudem Koordinaten der für die Bestimmung des Fehlerbudgets verwendeten Beobachtungsstationen und die damit verbundenen Abschattungswinkel übertragen und für die Berechnung der Verteilung der Genauigkeit der Fehlerabschätzung der Erzeugung des Navigationssignals verwendet werden.

8. Verfahren nach einem der vorhergehenden Ansprüche,
   **dadurch gekennzeichnet, dass**
   zudem die erwartete Kontiunität der Verfügbarkeit von Messungen einer jeden für die Bestimmung des Fehlerbudgets verwendeten Beobachtungsstation oder jeder Gruppe von Beobachtungsstationen übertragen und für die Berechnung des skalaren Werts verwendet.

9. Verfahren nach einem der vorhergehenden Ansprüche,
   **dadurch gekennzeichnet, dass**
   ferner eine erste Alarmnachricht mit dem Navigationssignal übertragen wird, wenn eine Beobachtungsstation ausgefallen ist.

10. Verfahren nach einem der vorhergehenden Ansprüche,
    **dadurch gekennzeichnet, dass**

ferner bei Verlust von einer Messung eines Satellitensignals durch eine Beobachtungsstation die Nummer der Beobachtungsstation und des betroffenen Satelliten mit dem Satellitennavigationssignal übertragen wird.

11. Verfahren nach einem der vorhergehenden Ansprüche,
   **dadurch gekennzeichnet, dass**
   ferner eine zweite Alarmnachricht mit dem Navigationssignal übertragen wird, wenn das Fehlerbudget verändert werden soll.

12. Nutzungssystem (18) für ein Satellitennavigationssystem, insbesondere mobiles Navigationsgerät, das zur Benutzung mit einem Verfahren nach einem der vorhergehenden Ansprüche ausgebildet ist.

13. Nutzungssystem nach Anspruch 10,
   **dadurch gekennzeichnet, dass**
   es ferner ausgebildet ist, aus einem empfangenen Fehlerbudget eine Verteilung der Genauigkeit der Fehlerabschätzung der Erzeugung des Navigationssignals zu berechnen und daraus ein Integritätsrisiko zu ermitteln.

14. Nutzungssystem nach Anspruch 11,
   **dadurch gekennzeichnet, dass**
   es ferner ausgebildet ist, die Verteilung der Genauigkeit der Fehlerabschätzung der Erzeugung des Navigationssignals derart zu berechnen, dass eine vorbestimmte Kontinuität erreicht werden kann.

15. Vorrichtung (24) zur Verbesserung der Integritätskommunikation in einem Satellitennavigationssystem (10), das ein Raumsegment (12) mit mehreren Satelliten (14), die Navigationssignale (16) zum Empfangen und Auswerten durch Nutzungssysteme (18) für die Positionsbestimmung aussenden, und ein Bodensegment (20) mit mehreren Beobachtungsstationen (22), welche die Satelliten (14) überwachen, umfasst, wobei die Vorrichtung folgendes umfasst:

   - Fehlerbudgetbestimmungsmittel (26) zum Bestimmen eines Fehlerbudgets für unterschiedliche Beobachtungsstationen oder Gruppen von Beobachtungsstationen, und
   - Übertragungsmittel (28) zum Übertragen des Fehlerbudgets an mindestens einen Satelliten zum Aussenden mit einem Navigationssignal eines Satelliten.

Fig. 1

S10

| Übertragen eines Fehlerbudgets für unterschiedliche Beobachtungsstationen oder Gruppen von Beobachtungsstationen |
|---|

S12

| Empfangen des Navigationssignals und Auswerten des darin enthaltenden Fehlerbudgets |
|---|

Fig. 2

Europäisches
Patentamt

European
Patent Office

Office européen
des brevets

## EUROPÄISCHER RECHERCHENBERICHT

Nummer der Anmeldung

EP 08 01 8111

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | S. JOURNO, J. POUMAILLOUX, J-M. PIÉPLU, P. GOUNI: "Producing the Galileo Services From the Ground Mission Segment (GMS)" PROCEEDINGS OF ION GNSS 2006, 26. September 2006 (2006-09-26), Seiten 504-519, XP002521138 Fort Worth, Texas, USA * Abbildung 8 * * Seite 511, linke Spalte, Absatz 1 * * Seite 515, Absatz 2 - Seite 516, Absatz 3 * | 1-6, 12-15 | INV. G01S1/00 |
| X | BLOMENHOFER B ET AL: "GNSS/Galileo Global and Regional Integrity Performance Analysis" ION GNSS. INTERNATIONAL TECHNICAL MEETING OF THE SATELLITEDIVISION OF THE INSTITUTE OF NAVIGATION, WASHINGTON, DC, US, 21. September 2004 (2004-09-21), Seiten 2158-2168, XP002415356 * Seiten 2165-2167, Abschnitt "The Galileo Multi-Regional Monitoring Concept" * | 1-6, 12-15 | |
| A | OEHLER V ET AL: "The Galileo Integrity Concept" ION GNSS. INTERNATIONAL TECHNICAL MEETING OF THE SATELLITEDIVISION OF THE INSTITUTE OF NAVIGATION, WASHINGTON, DC, US, 21. September 2004 (2004-09-21), Seiten 604-615, XP002375520 * Seiten 606-607, Abschnitt 3.1 "System Alert Mechanism" * | 1-15 | RECHERCHIERTE SACHGEBIETE (IPC) G01S |

-/--

Der vorliegende Recherchenbericht wurde für alle Patentansprüche erstellt

| Recherchenort | Abschlußdatum der Recherche | Prüfer |
|---|---|---|
| München | 26. März 2009 | Hekmat, Taymoor |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

European Patent Office

Office européen des brevets

## EUROPÄISCHER RECHERCHENBERICHT

Nummer der Anmeldung

EP 08 01 8111

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | C. HERNÁNDEZ ET AL: "GALILEO Integrity: The Ground Segment Computation Algorithm Perspective" PROCEEDINGS OF ION GNSS 2006, 26. September 2006 (2006-09-26), Seiten 2634-2645, XP002521139 Fort Worth, Texas, USA * das ganze Dokument * ----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 26. März 2009 | Hekmat, Taymoor |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)